# EUROPEAN PATENT SPECIFICATION

(11) **EP 4 630 227 B1**
(45) Date of publication and mention of the grant of the patent: **25.11.2026**
(21) Application number: 23844561.3
(22) Date of filing: 08.12.2023
(51) Int. Cl.: B29C 70/38, B29B 15/08, B29C 70/54

(54) **METHODS FOR PREPARING AND USING PREPREG LAYER SEGMENTS FOR ADDITIVE MANUFACTURING AND PRODUCTS PRODUCED THEREFROM**
VERFAHREN ZUR HERSTELLUNG UND VERWENDUNG VON PREPREG-SCHICHTSEGMENTEN ZUR GENERATIVEN FERTIGUNG UND DARAUS HERGESTELLTE PRODUKTE
MÉTHODES DE PRÉPARATION ET D'UTILISATION DE SEGMENTS DE COUCHE DE PRÉIMPRÉGNÉ POUR LA FABRICATION ADDITIVE ET PRODUITS PRODUITS À PARTIR DE CEUX-CI

(30) Priority: 08.12.2022 US 202263431269 P
(43) Date of publication of application: 15.10.2025
(73) Proprietor: OSSUR ICELAND EHF, 110 Reykjavik (IS)
(72) Inventor: ÁSGEIRSSON, Sigurdur, 110 Reykjavik (IS)
(74) Representative: Winger
(86) International application number: PCT/US2023/083070
(87) International publication number: WO 2024/124100

(56) References cited:
- DE-U1- 202014 100 515
- FR-A1- 3 120 007
- JP-A- H04 122 645

## Description

### FIELD OF THE DISCLOSURE

The disclosure relates to methods for preparing prepreg layer segments and the additive manufacturing of composite parts using the prepreg layer segments.

### BACKGROUND

Composite materials include carbon fiber-reinforced polymers or other materials relying on two structurally different constituents. Polymer-based composites are the most commonly used composites. The choice of reinforcement and polymer is made based on the requirements of the component, such as predicted load cases and environmental conditions. The polymers mostly used in composites can be divided into two main categories: thermoplastic and thermoset. The fibers can be made from almost anything, from hemp to aramid, but glass and carbon fibers are most commonly used in structural applications today.

Composites typically possess attractive properties, including high strength and low weight. Due to these properties, lightweight designs can be adopted using such composite materials. Lightweight may refer to the high stiffness-to-weight ratio and the possibility of choosing the reinforcement directions to match potential load criteria. Composites may be chosen partly for their excellent fatigue properties. Another advantage of composites is the possibility of producing highly integrated structures instead of assembling many parts after manufacturing. However, despite the advantages of composite materials, manufacturing such materials may have high production costs.

Many existing manufacturing technologies rely on fiber placement technologies that can lay bundles of fibers or tapes at various orientations on a range of tooling. There are two dominant manufacturing technologies for automated manufacturing using prepreg: automated tape layup and automated fiber placement. However, these technologies are unsuitable for all products due to technical limitations, high investment costs, and low productivity. DE202014100515 describes a tape-laying apparatus for forming laminate structures by depositing adjacent fiber-reinforced tapes and consolidating them during lay-up using ultrasonic excitation. JPH04122645 which discloses the features of the preamble of claim 1, describes producing a prepreg laminated sheet using a prepreg tape carried on backing paper, wherein the prepreg is cut into predetermined pieces without cutting the backing paper, unnecessary prepreg is removed, and the pieces are peeled from the backing paper and successively oriented and laminated to form a prepreg sheet.

"Prepreg" is a reinforcing fabric of fibers pre-impregnated with a resin system. This resin system, typically a thermoset-like epoxy, already includes the proper curing agent. The prepreg is ready to lay into the mold without adding more resin. Prepreg allows one to impregnate the fibers on a flat, workable surface, or rather in an industrial process, and then later form the impregnated fibers into a shape that could prove problematic for the hot injection process.

Automation alternatives to manufacturing technologies have been attempted but have had limited impact. The prepreg requires precise and controlled placement to create a predetermined shape, size, and sequence. Due to the lack of automation alternatives available for certain applications, manual manufacturing methods are commonly employed for manufacturing complex-shaped products in low to medium manufacturing volumes. Indeed, in alternative methodologies, the composites may be manufactured by manually placing layers of fiber-reinforced fabric. Such processes take time and generate costs that may make the process cost-prohibitive, particularly for smaller and more complex components and low-scale products.

### SUMMARY

According to methods, apparatus, and systems of this disclosure, an assembled tape of prepreg layer segments is formed, which can be used to form a sheet usable in making complex parts in an automated manner. The process relies on precise control of prepreg layer segments placed on the assembled tape, which is subsequently used by an automated deposition device to make a sheet or fabric comprising the prepreg layer segments for making a definitive part. The shape and manner of the sheet can be controlled in advance, as the prepreg layer segments form the building blocks or elements of the sheet, thereby leading to predetermined shape and controlled properties by arranging the prepreg layer segments relative to one another.

Therefore, the methods, apparatuses, and systems of the disclosure present an additive manufacturing method, relying on preparing an assembled tape for depositing a plurality of prepreg layer segments layer upon layer in precise geometric shapes. The additive manufacturing methods, apparatuses, and systems rely on adding material as prepreg layer segments to create an object. While the definitive sheet or fabric may be molded over a mold, unlike in traditional methods, removing material through milling, machining, carving, shaping, or other means may not be necessary.

Due to the incremental build-up of the sheet by the prepreg layer segments, smaller parts that previously would have been manually formed can be automatically fabricated based on the controlled configuration of the prepreg layer segments. Likewise, the sheet can be formed faster with more precision as the deposition of the prepreg layer segments is precisely controlled.

The methods, apparatuses, and systems may rely on the controlled cutting of a prepreg tape into prepreg layer segments having a controlled length and distance from one another and placed on a backing tape for later manufacturing. When using the prepreg layers segments, they can be easily transported on the assembled tape through and by a delivery head that is numerically controlled to incrementally lay up the prepreg layer segments in a predetermined configuration, including dimensional relationships, orientation among prepreg layer segments, and areas of reinforcement by both dimensional relationships or orientation of prepreg layer segments. The fabric formed by the process may be subsequently molded or molded in situ, and the resin can be cured into a preconfigured mold shape to form a definitive part.

According to the method or process of the disclosure, an assembled tape is formed by including a plurality of prepreg layer segments. The method involves unwinding a continuously extending tape including a resin-impregnated reinforcing material from a first spool; cutting a predetermined length from the continuously extending tape to form a first prepreg layer segment; applying the first prepreg layer segment onto a continuously extending backing tape to form part of the assembled tape; cutting a second predetermined length from the continuous resin-impregnated reinforcing material to form a second tape segment, and applying the second tape segment to the continuously extending backing tape a predetermined distance from the first prepreg layer segment as part of the assembled tape.

In another method or process of the disclosure, stacking a plurality of prepreg layer segments onto a flat substrate involves the steps of: unspooling an assembled tape from a spool such that the assembled tape includes a plurality of prepreg layer segments, extending the assembled tape from the spool to a delivery head; depositing a first prepreg layer segment from the spool by the delivery head onto the substrate in a first configuration; depositing a second prepreg layer segment by the delivery head onto the substrate in a second configuration relative to the first configuration such that the first and second prepreg layer segments at least partially overlap.

A tape preparation device is arranged to prepare an assembled tape, including a plurality of prepreg layer segments according to any combination of components, functionalities, and steps described above.

An additive manufacturing device is arranged for stacking a plurality of prepreg layer segments onto a substrate according to any combination of components, functionalities, and steps described above.

An assembled tape is a product with any combination of features and functions described above, including at least two prepreg layer segments.

According to the steps or features described above, an assembled prepreg structure may be formed from at least two prepreg layer segments.

The numerous other advantages, features, and functions of embodiments of the methods, apparatuses, and system discussed herein will become readily apparent and better understood because of the following description and accompanying drawings. The following description is not intended to limit the scope of the methods, apparatuses, and systems but merely provides exemplary embodiments for ease of understanding.

### BRIEF DESCRIPTION OF THE DRAWINGS

These and other features, aspects, and advantages of the present invention will become better understood concerning the following description, appended claims, and accompanying drawings.
Fig. 1 is a schematic view showing an assembled tape preparation device for forming an assembled tape, including at least two prepreg layer segments.
Fig. 2 is a detailed view I from Fig. 1, showing the assembly of a prepreg layer segment to the backing tape.
Fig. 3 is a detailed view II from Fig. 1, showing an assembled tape of at least two prepreg layer segments on the backing tape.
Fig. 4 is a schematic view showing an additive manufacturing device for layering at least two prepreg layer segments from a spool of assembled tape.
Fig. 5 is a schematic view showing a delivery device for depositing prepreg layer segments onto a substrate.
Fig. 6 is a schematic view of the initial phase of depositing a first prepreg layer segment onto a substrate.
Fig. 7 is a schematic view of the middle phase of depositing the first prepreg layer segment onto the substrate in Fig. 6.
Fig. 8 is a schematic view of the final phase of depositing the first prepreg layer segment onto the substrate in Fig. 6.
Fig. 9 is a schematic view of the initial phase of depositing the second prepreg layer segment onto the substrate in Fig. 6.
Fig. 10 is a schematic view showing a plurality of prepreg layer segments forming a sheet on the substrate in Fig. 6.
Fig. 11 is a schematic view showing the sheet of Fig. 10 in a press.

### DETAILED DESCRIPTION OF VARIOUS EMBODIMENTS

A better understanding of different embodiments of the disclosure may be had from the following description and accompanying drawings in which reference characters refer to like elements.

While the disclosure is susceptible to various modifications and alternative constructions, certain illustrative embodiments are described in the drawings below. It should be understood, however, there is no intention to limit the disclosure to the embodiments disclosed, but on the contrary, that the invention covers all modifications, alternative constructions, combinations, and equivalents falling within the scope of the appended claims.

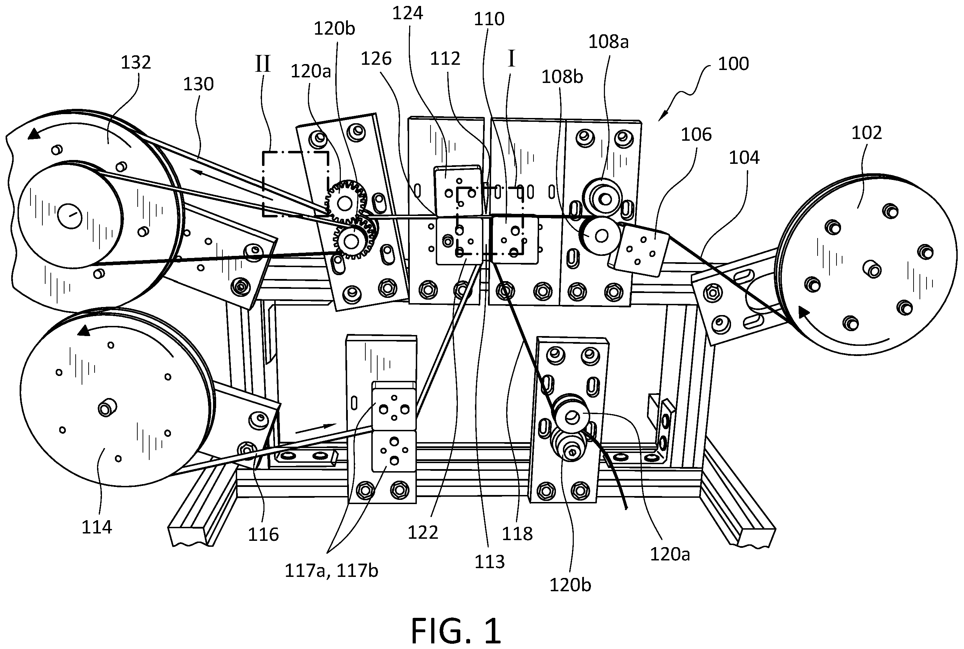

Referring to Fig. 1, a prepreg tape preparation device 100 is disclosed for initiating a method for preparing an assembled tape 130, including a plurality of prepreg layer segments 104a, 104b.

The prepreg may be formed or arranged to form composite materials, such as carbon fiber-reinforced polymers. Generally, composite materials include materials classified as reinforcement and matrix. The reinforcement strengthens the composite, while the matrix protects the reinforcing fibers from the surroundings and helps transfer loads to the fibers. The matrix has a major influence over the processing characteristics of composite material and thus has an important influence on the prerequisites for manufacturing composites.

For fiber-reinforced polymers, there are two main types of matrixes: thermoset and thermoplastic polymers. Thermoset polymers are comprised of two or more substances mixed before use. Mixing the substances triggers a curing process, which means a limited material lifetime after mixing. Even though curing starts after mixing, many matrix materials require curing at elevated temperatures and pressures to achieve the desired material properties, especially materials used for high-performance applications. The methods herein preferably employ thermoset matrixes, particularly epoxy, which may require highly controlled curing in an autoclave or press with elevated temperatures and pressures.

Two major aspects to consider for reinforcing a fiber polymer are the fiber material and the arrangement. Common fiber materials are glass, aramid, boron, and carbon. Carbon fibers are preferably the reinforcement material in the embodiments herein, although the reinforcement is not limited to such material. The fibers can be chopped to short lengths or used as long, continuous fibers. Furthermore, they can be arranged randomly or with controlled fiber orientation. Continuous fibers can either be straight or crimped, as in woven reinforcements. Reinforcements, where continuous fibers are aligned in the same direction, are usually called uni-directional materials.

Prepreg materials have some key characteristics that can have a distinct effect on the manufacturing method. Prepreg tack, shear, and bending behavior affect prepreg layup. Prepreg tack is usually defined as the ability of two prepreg plies to adhere to each other, and this ability is necessary for an easy layup. The tack depends on the resin used as a matrix, the fibers, and ambient conditions. Depending on the manufacturing method and the use of backing tape, the tack level can differ between the sides of a prepreg ply.

The level of tack depends on temperature, the age of the material, and relative humidity in the air during aging. Different prepreg materials exhibit different responses to temperature changes, where low-tack prepreg shows an increased tack and high-tack prepreg shows a decreased tack with increased temperatures. The contact time and force used during attachment and heat also affects the bond between two pieces of prepreg or a piece of prepreg and another surface.

The method includes unwinding a continuously extending tape 104 including a resin-impregnated reinforcing material from a first spool 102; cutting a predetermined length 11 from the continuously extending tape 104 to form a first prepreg layer segment 104a; applying the first prepreg layer segment 104a onto a continuously extending backing tape 116 to form part of the assembled tape 130; cutting a second predetermined length 12 from the continuous resin-impregnated reinforcing material to form a second layer segment 104b; applying the second layer segment 104b to the continuously extending backing tape 116 a predetermined distance d1 from the first prepreg layer segment 104a as part of the assembled tape 130.

The tape 104 may continuously extend without interruption between a cutter 112 and the first spool 102. The tape 104 is preferably tensioned by or about at least one tension block 106 between the cutter 112 and the first spool 102. The at least one tension block 106, 110 over which the tape 104 extends may include a channel or groove 134 into which the tape 104 extends as it is fed by at least one roller 108a, 108b.

As shown in Fig. 1, the tape 104 is transported or pulled from the first spool 102 by at least one roller 108a, 108b toward the cutter 112. The at least one roller 108a, 108b intermittently transports the tape 104 toward the cutter 112 according to placement and spacing of the first and second prepreg layer segments 104a, 104b on the backing tape 116. The process, wherein the at least one roller 108a, 108b stops transporting the tape 104 when a predetermined length of the tape extends past the cutter 112 for forming the first prepreg layer segment 104a.

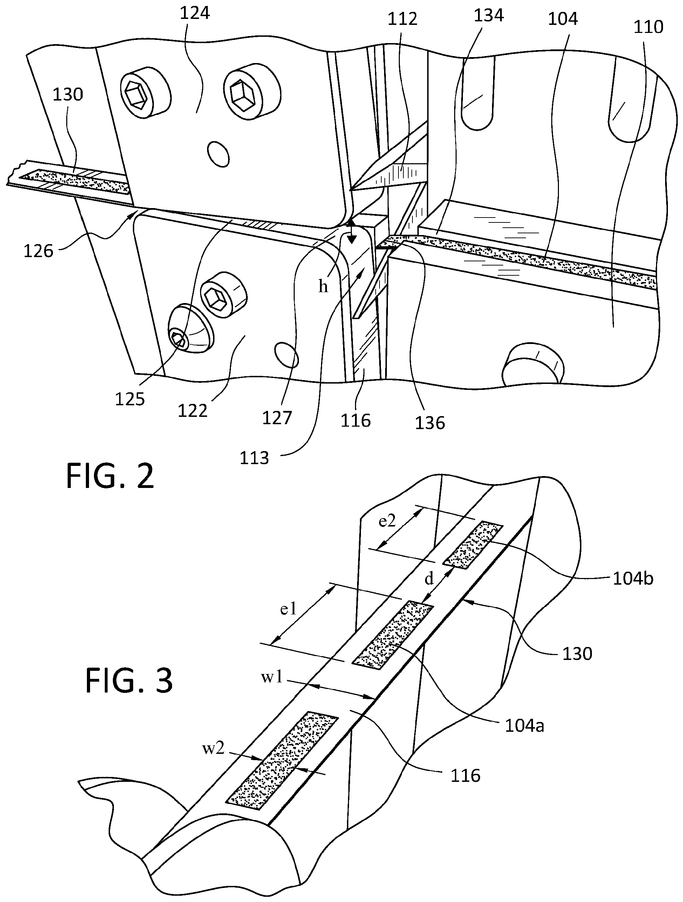

The backing tape 116 is continuously drawn without interruption or stopping relative to the intermittent transport of the tape 104. A severed edge 136 of the tape 104, as shown in Fig. 2, may be suspended in the cutting station 113 as the backing tape 116 is transported until a distance d is formed such that the tape 104 is subsequently advanced through the cutting station 113 and applied to the backing tape 116 until a predetermined length is reached at which point the cutter 112 severs the thusly formed first prepreg layer segment 104a from the tape 104.

For example, a carrier film 118 on the tape 104 is removed from the first prepreg layer segment 104a before or when cutting the predetermined length from the continuous resin-impregnated reinforcing material. The carrier film 118 is pulled away from the tape 104 at a cutting station 113, defined as a gap between first and second tension blocks 110, 122 spaced apart from one another by a clearance wherein the cutter 112 is operable to sever the first prepreg layer segment 104a from the tape 104. The at least one roller or transport device 120a, 120b pulls the carrier film 118 from the cutting station 113, and is tensioned about a tension block 110.

An underside of the prepreg layer segment adjacent to the backing tape 116 may have more, less, or equal tack as an upper side of the prepreg layer. Accordingly, as mentioned above, the tape 104 may be configured along its under and upper sides with tack to facilitate separation from the carrier film 118, yet adherence to the backing tape 116 and additive manufacturing is tacky to secure to an adjacent film layer segment.

As shown in Fig. 1, the backing tape 116 preferably extends past and is tensioned about at least one tension block 117a, 117b before the first prepreg layer segment 104a is deposited thereon to facilitate adherence. The first prepreg layer segment 104a adheres to the backing tape 116 as the backing tape 116 is continuously fed over a tension block 122. The first prepreg layer segment 104a and the backing tape 116 are pressed to one another between a nip block 124 and the tension block 122 to form an intact, as in the prepreg layer segments adhering to the backing tape until forcefully removed, assembled tape 130. The process further includes spooling the assembled tape 130 onto a second spool 132.

The first prepreg layer segment 104a includes adhesive or adhesive properties (such as tack of varying and selective degrees). The backing tape 116 has properties permitting the removal of the first prepreg layer segment 104a while maintaining the backing tape 116 intact. When a prepreg layer segment is removed, the backing tape 116 is arranged to withstand stripping forces at a predetermined force.

Fig. 2 illustrates the nip block 124 and the tension block 122 as forming a slot 125 through which the first prepreg layer segment 104a is adhered to the backing tape 116 by each being fed therethrough. The slot 125 forms a first end having a feed inlet 127 having a greater height h than a second end defining a nip 126 whereby the first prepreg layer segment 104a is pressed onto the backing tape 116.

In determining the dimensional relationships between the prepreg layer segments and the backing tape, Fig. 3 illustrates that the first prepreg layer segments may be thicker than the backing tape. The prepreg layer segments may be more rigid than the backing tape. The backing tape may be wider w1 than the width w2 of the prepreg layer segments. The first and second prepreg layer segments have the same length 11, 12. Despite these relationships, the process is numerically and computer controlled so that the prepreg layer segments may have varying dimensions, such as length, among each other, as the placement or location of such prepreg layer segments on the backing tape can be tracked and sensed in the formation of the assembled film and subsequent deposition on a substrate.

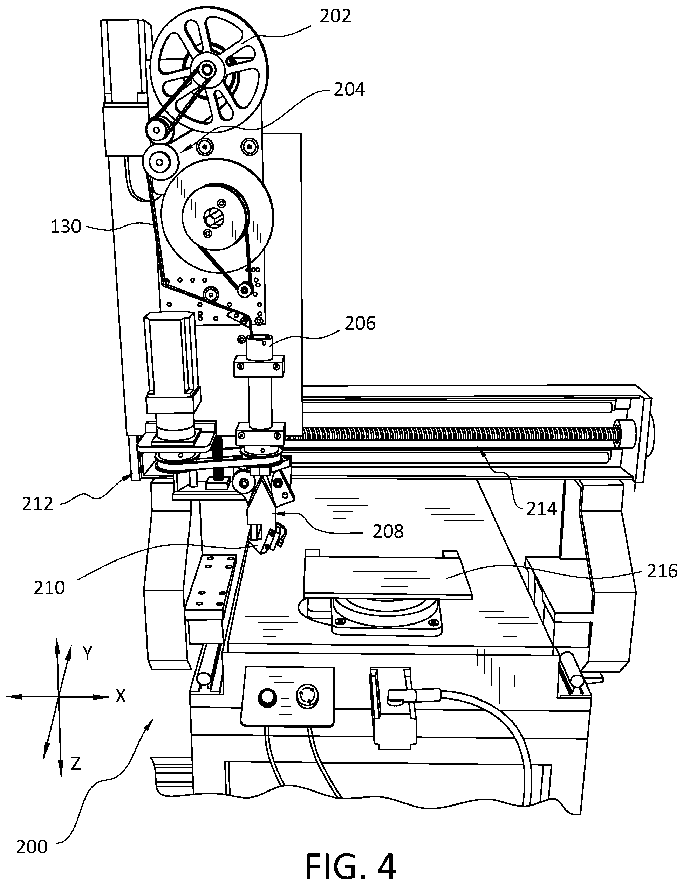

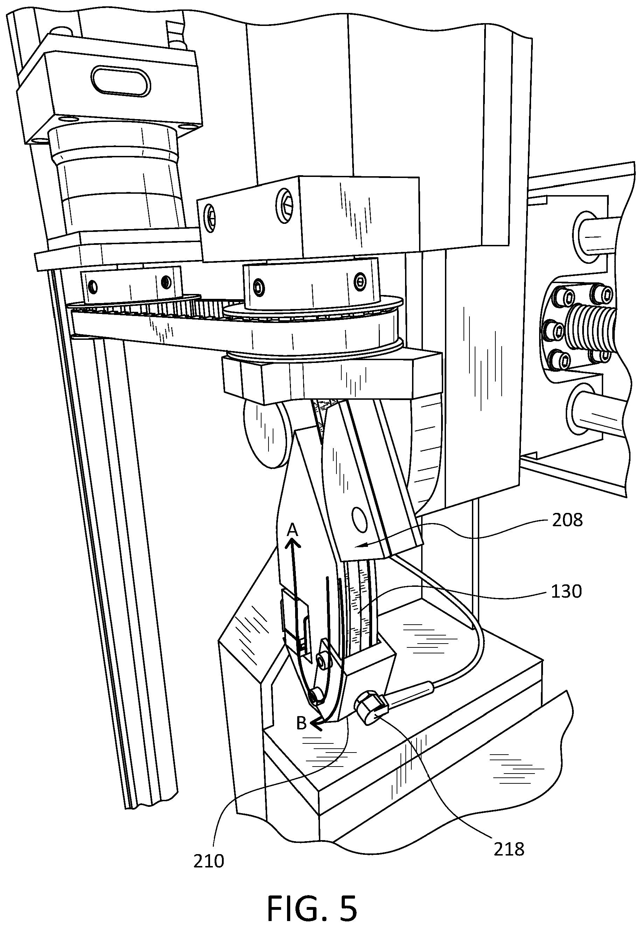

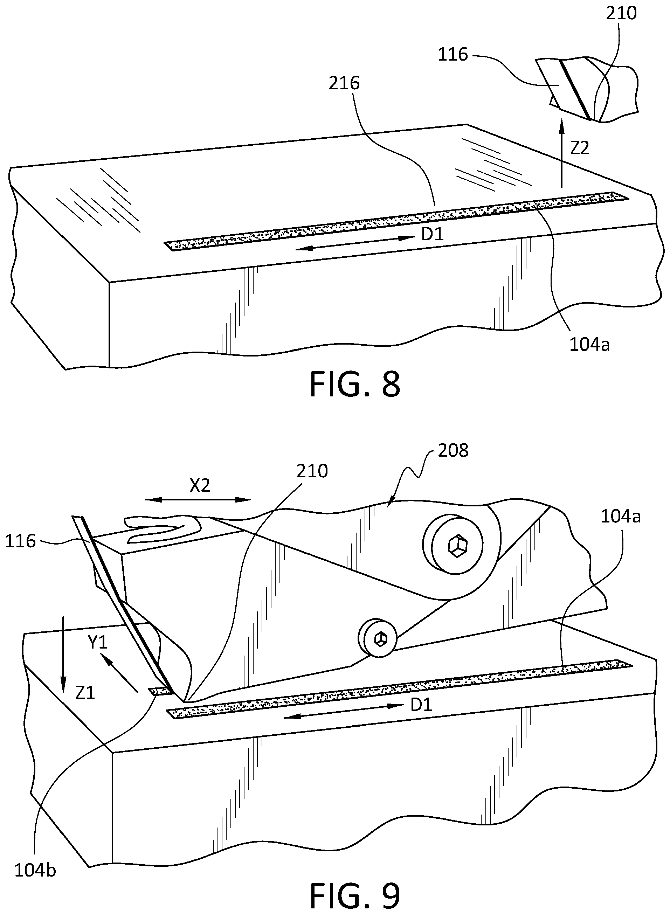

According to the depiction in Figs. 4-10, a process and additive manufacturing device 200 are provided as examples for stacking a plurality of prepreg layer segments 104a, 104b onto a flat substrate 216. The process and device include unspooling an assembled tape 130 from a spool 202 according to the process above for preparing an assembled tape including a plurality of prepreg layer segments; extending the assembled tape 130 from the spool 202 to a delivery head; depositing a first prepreg layer segment 104a from the spool by the delivery head 208 onto the substrate 216 in a first configuration D1, and depositing a second prepreg layer segment 104b by the delivery head 208 onto the substrate 216 in a second configuration D2 relative to the first configuration D1.

An assembled prepreg structure is formed by laying up at least the first and second prepreg layer segments on top of each other to form a flat structure. Alternatively, the substrate may have contours generally corresponding to a mold of a definitive product, and such prepreg layer segments can be applied over the substrate according to the contours, preferably under pressure to form a predetermined shape.

A feed device 204 transports the assembled tape 130 from the spool 202 to a feed chamber 206, directing the assembled tape 130 to the delivery head 208. The delivery head 208 defines a head tip 210 where the assembly tape extends and the prepreg layer segments are removed from the backing tape to be applied to the substrate 216. The backing tape 116 may extend about the delivery head 208 in a first arcuate direction A as the prepreg layer segments are separated therefrom and deposited from the head tip 210 in a second direction B generally tangent to the first arcuate direction A to the substrate 216.

The delivery head 208 may be supported by a gantry 214 arranged to adjust the delivery head 208 in at least two axes. The delivery head 208 is connected by an adjustment device 212 arranged to adjust the delivery head 208 in at least a vertical axis relative to the mold. For example, the delivery head is controllable in at least two axes and preferably in at least three axes, as evidenced by x-, y-, and z-axes in Fig. 4.

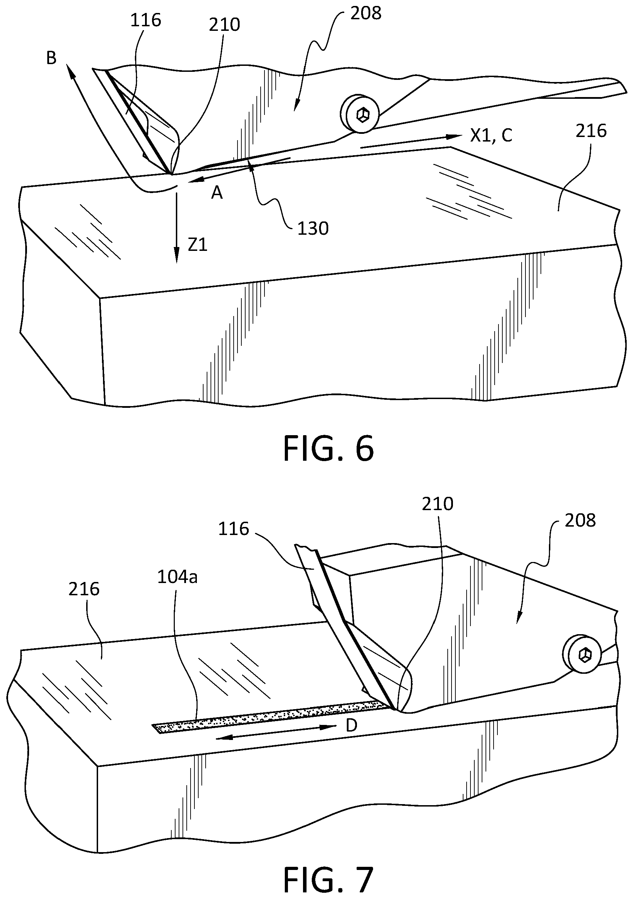

The delivery head 208 is preferably arranged to deposit the prepreg layer segments at different intervals, as shown in Figs. 6-10. The delivery head is configured to deposit the first prepreg layer segment in the first configuration. Then, the delivery head readjusts position to deposit the second prepreg layer segment in the second configuration.

The delivery head 208 can adjust vertically and horizontally when depositing the first prepreg layer segment 104a. The delivery head 208 may subsequently readjust before or when depositing the second prepreg layer segment 104b. The backing tape 116 may bias about the head tip 210 to thereby separate the first prepreg layer segment 104a therefrom.

The head tip 210 may apply appropriate pressure to the first prepreg layer segment 104a while moving in a first direction when depositing the first prepreg layer segment onto the substrate to facilitate greater tack to the substrate or more cleanly separate the prepreg layer segment from the backing tape. The substrate 216 may be heated as the first prepreg layer segment is deposited thereon to facilitate tack but may be maintained below a threshold to permit a subsequently formed sheet to be placed in a press to form a definitive shape of a product.

The delivery head 208 may include a sensor 218 for tracking the length of the first prepreg layer segment as it circulates through the delivery head 208 while being deposited to the substrate 216. An assembled prepreg structure, fabric or sheet 220 is formed by at least the first and second prepreg layer segments. The assembled prepreg structure 220 may be generally flat and placed in a compression molding device 222 to form a non-flat shape.

The method of depositing the prepreg layer segments on the substrate enables detailed and incremental deposition of the prepreg. Such a method can be executed with a simplified manufacturing process that can be created at a small scale and can be finely controlled numerically by a software interface. The segments can be sufficiently small to eliminate or significantly reduce further manufacturing processes. Indeed, the assembled tape can be modified according to the length of the prepreg layer segments, which can subsequently be used for depositing on a substrate. Due to the control of the deposition head in the different axes and considerable control as to where the prepreg layer segments are deposited, different regions of the assembled prepreg structure may have localized areas of greater prepreg layer segments or reduced prepreg layer segments according to the design demands of the final product.

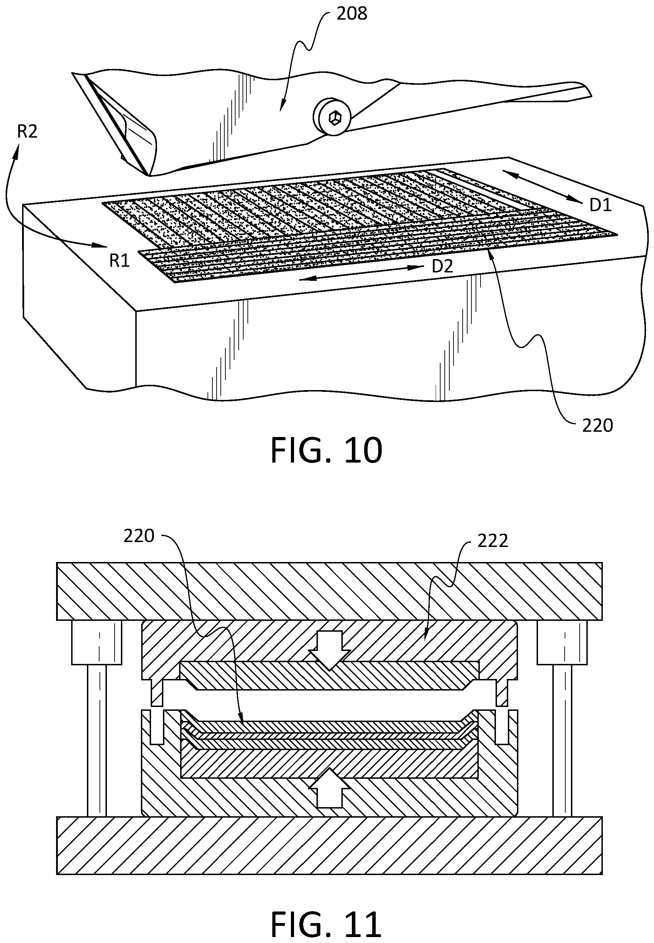

Fig. 11 exemplifies an assembled prepreg structure 220, including at least the first and second prepreg layer segments 104a, 104b in a compression molding device 222.

Accordingly, from the preceding discussion, a prepreg tape preparation device 100 may be provided for preparing an assembled tape 130, including a plurality of prepreg layer segments 104a, 104b according to any combination of components, functionalities, and steps described above.

An additive manufacturing device 200 is provided for stacking a plurality of prepreg layer segments 104a, 104b onto a substrate 216 according to any combination of components, functionalities, and steps described above.

An assembled tape having at least two prepreg layer segments may be formed according to any combination of components, functionalities and steps described above.

According to the components, functionalities, and steps described above, an assembled prepreg structure 220 may be formed from at least two prepreg layer segments.

According to the embodiments above, the disclosure envisions a manufacturing method or methods for assembling a prepreg tape divided into a plurality of prepreg layer segments on a backing tape for subsequent use in an additive manufacturing process and the additive manufacturing process itself according to the features above.

While various aspects and embodiments have been disclosed herein, other aspects and embodiments are contemplated. The various aspects and embodiments disclosed herein are for illustration purposes and are not intended to be limiting. Additionally, the words "including," "having," and variants thereof (e.g., "includes" and "has") as used herein, including the claims, shall be open-ended and have the same meaning as the word "comprising" and variants thereof (e.g., "comprise" and "comprises").

It is understood that not all objects or advantages may be achieved under any embodiment of the disclosure. Those skilled in the art will recognize that the prepreg assembled tape may be embodied or carried out to achieve or optimize one advantage or group of advantages as taught herein without necessarily achieving other objects or advantages as may be taught or suggested herein.

The skilled artisan will recognize the interchangeability of various disclosed features. Besides the variations described herein, other known equivalents for each feature can be mixed and matched by one of ordinary skill in this art to construct processes, apparatuses, and systems by principles of the present disclosure. Further, it will be understood by the skilled artisan that the features described herein may be adapted to other types of devices.

Although this disclosure describes certain exemplary embodiments, methods, and examples, it will be understood by those skilled in the art that the present disclosure extends beyond the specifically disclosed embodiments to other alternative embodiments and/or uses of the disclosure and obvious modifications and equivalents thereof provided they fall within the scope of the appended claims.

## Claims

1. A process for preparing an assembled tape (130) including a plurality of prepreg layer segments (104a, 104b), comprising the steps of:
unwinding a continuously extending tape (104) including a resin-impregnated reinforcing material from a first spool (102);
cutting a predetermined length (l1) from the continuously extending tape (104) to form a first prepreg layer segment (104a);
cutting a second predetermined length (l2) from the continuous resin-impregnated reinforcing material to form a second layer segment (104b); and
**characterized in that** the process comprises applying the first prepreg layer segment (104a) onto a continuously extending backing tape (116) to form part of the assembled tape (130) and applying the second layer segment (104b) to the continuously extending backing tape (116) a predetermined distance (d1) from the first prepreg layer segment (104a) as part of the assembled tape (130).

2. The process of claim 1, wherein the tape (104) continuously extends without interruption between a cutter (112) and the first spool (102).

3. The process of claim 1, wherein the tape (104) is tensioned by or about at least one tension block (106) between a cutter (112) and the first spool (102).

4. The process of claim 3, wherein the at least one tension block (106, 110) over which the tape (104) extends includes a channel or groove (134) into which the tape (104) extends as it is fed by at least one roller (108a, 108b).

5. The process of claim 1, wherein the tape (104) is transported or pulled from the first spool (102) by at least one roller (108a, 108b) toward a cutter (112).

6. The process of claim 5, wherein the at least one roller (108a, 108b) intermittently transports the tape (104) toward a cutter (112) according to placement and spacing of the first and second prepreg layer segments (104a, 104b) on the backing tape (116), or the at least one roller (108a, 108b) stops transporting the tape (104) when a predetermined length of the tape extends past the cutter (112) for forming the first prepreg layer segment (104a).

7. The process of claim 1, wherein the backing tape (116) is continuously drawn without interruption or stopping relative to the intermittent transport of the tape (104), a severed edge of the tape (104) being suspended in the cutting station (113) as the backing tape (116) is transported until a distance (d) is formed such that the tape (104) is subsequently advanced through the cutting station (113) and applied to the backing tape (118) until a predetermined length is reached at which point the cutter (112) severs the thusly formed first prepreg layer segment (104a) from the tape (104).

8. The process of claim 7, wherein the backing tape (116) extends past and is tensioned about at least one tension block (117a, 117b) before the first prepreg layer segment (104a) is deposited thereon.

9. The process of claim 1, wherein the first prepreg layer segment (104a) is adhered to the backing tape (116) as the backing tape (116) is continuously fed over a tension block (122) and the first prepreg layer segment (104a) and the backing tape (116) are pressed to one another between a nip block (124) and the tension block (122).

10. The process of claim 9, wherein the first prepreg layer segment (104a) includes an adhesive or adhesive properties, the backing tape (116) having properties permitting removal of the first prepreg layer segment (104a) as a whole while maintaining the backing tape (116) intact and the backing tape arranged to withstand stripping forces at a predetermined force when the first prepreg layer segment is removed therefrom.

11. The process of claim 9, wherein the nip block (124) and the tension block (122) form a slot (125) through which the first prepreg layer segment (104a) is adhered to the backing tape (116) by each being fed therethrough.

12. The process of claim 11, wherein the slot (125) forms a first end having a feed inlet (127) having a greater height (h) than a second end defining a nip (126) whereby the first prepreg layer segment (104a) is pressed onto the backing tape (116).

13. The process of claim 1, wherein the first prepreg layer segment (104a) is either thicker than the backing tape (116), or the first prepreg layer segment (104a) is more rigid than the backing tape (116).

14. The process of claim 1, wherein the backing tape (116) is wider than the first prepreg layer segment (104a) or the first and second prepreg layer segments have a same length (l1, l2).

15. The process of claim 1, further comprising the step of removing a carrier film (118) from the first prepreg layer segment (104a) before or when cutting predetermined length from the continuous resin-impregnated reinforcing material;
wherein the carrier film (118) is pulled away from the tape (104) at a cutting station (113), defined as a gap between first and second tension blocks (110, 122) spaced apart from one another by a clearance wherein a cutter (112) is operable to sever the first prepreg layer segment (104a) from the tape (104).

## Patentansprüche

1. Ein Prozess zum Herstellen eines zusammengesetzten Bandes (130), das eine Vielzahl von Prepreg-Schichtsegmenten (104a, 104b) einschließt, umfassend die folgenden Schritte:
Abwickeln von einer ersten Spule (102) eines sich kontinuierlich erstreckenden Bandes (104), das ein harzimprägniertes Verstärkungsmaterial einschließt;
Abschneiden einer vorbestimmten Länge (11) von dem sich kontinuierlich erstreckenden Band (104) zum Bilden eines ersten Prepreg-Schichtsegments (104a);
Abschneiden einer zweiten vorbestimmten Länge (12) von dem kontinuierlichen, harzimprägnierten Verstärkungsmaterial zum Bilden eines zweiten Schichtsegments (104b); und
**dadurch gekennzeichnet, dass** der Prozess Aufbringen des ersten Prepreg-Schichtsegments (104a) auf ein sich kontinuierlich erstreckendes Trägerband (116) umfasst, um Teil des zusammengefügten Bandes (130) zu bilden, und Aufbringen des zweiten Schichtsegments (104b) auf das sich kontinuierlich erstreckende Trägerband (116) in einem vorbestimmten Abstand (d1) vom ersten Prepreg-Schichtsegment (104a) als Teil des zusammengefügten Bandes (130).

2. Der Prozess nach Anspruch 1, wobei sich das Band (104) kontinuierlich, ohne Unterbrechung zwischen einer Schneidevorrichtung (112) und der ersten Spule (102) erstreckt.

3. Der Prozess nach Anspruch 1, wobei das Band (104) durch oder um mindestens einen Spannblock (106) zwischen einer Schneidevorrichtung (112) und der ersten Spule (102) gespannt wird.

4. Der Prozess nach Anspruch 3, wobei der mindestens eine Spannblock (106, 110), über den sich das Band (104) erstreckt, einen Kanal oder eine Nut (134) einschließt, in die sich das Band (104) erstreckt, wenn es durch mindestens eine Walze (108a, 108b) zugeführt wird.

5. Der Prozess nach Anspruch 1, wobei das Band (104) von der ersten Spule (102) durch mindestens eine Walze (108a, 108b) zu einer Schneidevorrichtung (112) befördert oder gezogen wird.

6. Der Prozess nach Anspruch 5, wobei die mindestens eine Walze (108a, 108b) das Band (104) gemäß Platzierung und Beabstandung der ersten und zweiten Prepreg-Schichtsegmente (104a, 104b) auf dem Trägerband (116) intermittierend in Richtung einer Schneidevorrichtung (112) befördert oder die mindestens eine Walze (108a, 108b) Befördern des Bandes (104) stoppt, wenn sich eine vorbestimmte Länge des Bandes über die Schneidevorrichtung (112) hinaus erstreckt, um das erste Prepreg-Schichtsegment (104a) zu bilden.

7. Der Prozess nach Anspruch 1, wobei das Trägerband (116) kontinuierlich, ohne Unterbrechung oder Anhalten in Bezug auf die intermittierende Beförderung des Bandes (104) abgezogen wird, wobei eine durchtrennte Kante des Bandes (104) in der Schneidestation (113) aufgehängt wird, während das Trägerband (116) befördert wird, bis ein Abstand (d) gebildet ist, sodass das Band (104) anschließend durch die Schneidestation (113) vorgeschoben und auf das Trägerband (118) aufgebracht wird, bis eine vorbestimmte Länge erreicht ist, an deren Punkt die Schneidevorrichtung (112) das so gebildete erste Prepreg-Schichtsegment (104a) vom Band (104) abtrennt.

8. Der Prozess nach Anspruch 7, wobei sich das Trägerband (116) über mindestens einen Spannblock (117a, 117b) hinaus erstreckt und davon gespannt wird, bevor das erste Prepreg-Schichtsegment (104a) darauf abgelegt wird.

9. Der Prozess nach Anspruch 1, wobei das erste Prepreg-Schichtsegment (104a) an das Trägerband (116) geklebt wird, während das Trägerband (116) kontinuierlich über einen Spannblock (122) zugeführt wird und das erste Prepreg-Schichtsegment (104a) und das Trägerband (116) zwischen einem Andruckblock (124) und dem Spannblock (122) gegeneinander gepresst werden.

10. Der Prozess nach Anspruch 9, wobei das erste Prepreg-Schichtsegment (104a) einen Klebstoff oder Klebstoffeigenschaften einschließt, wobei das Trägerband (116) Eigenschaften aufweist, die Entfernen des ersten Prepreg-Schichtsegments (104a) als Ganzes unter Erhalt des Trägerbands (116) ermöglichen und das Trägerband so angeordnet ist, dass es Abziehkräften mit einer vorbestimmten Kraft standhält, wenn das erste Prepreg-Schichtsegment davon entfernt wird.

11. Der Prozess nach Anspruch 9, wobei der Andruckblock (124) und der Spannblock (122) einen Schlitz (125) bilden, durch den das erste Prepreg-Schichtsegment (104a) an das Trägerband (116) durch jeweils dadurch zugeführt zu werden geklebt wird.

12. Der Prozess nach Anspruch 11, wobei der Schlitz (125) ein erstes Ende bildet, das einen Zuführungseinlass (127) aufweist, der eine größere Höhe (h) als ein zweites Ende aufweist, das einen Anpressspalt (126) definiert, wodurch das erste Prepreg-Schichtsegment (104a) auf das Trägerband (116) gepresst wird.

13. Der Prozess nach Anspruch 1, wobei das erste Prepreg-Schichtsegment (104a) entweder dicker ist als das Trägerband (116) oder das erste Prepreg-Schichtsegment (104a) steifer ist als das Trägerband (116).

14. Der Prozess nach Anspruch 1, wobei das Trägerband (116) breiter ist als das erste Prepreg-Schichtsegment (104a) oder das erste und zweite Prepreg-Schichtsegment eine gleiche Länge (11,12) aufweisen.

15. Der Prozess nach Anspruch 1, weiter umfassend den Schritt des Entfernens einer Trägerfolie (118) vom ersten Prepreg-Schichtsegment (104a) vor oder beim Abschneiden einer vorbestimmten Länge von dem kontinuierlichen, harzimprägnierten Verstärkungsmaterial;
wobei die Trägerfolie (118) an einer Schneidstation (113) vom Band (104) abgezogen wird, die als ein Spalt zwischen einem ersten und einem zweiten Spannblock (110, 122) definiert ist, die durch einen Zwischenraum voneinander beabstandet sind, wobei eine Schneidevorrichtung (112) betriebsfähig ist, um das erste Prepreg-Schichtsegment (104a) vom Band (104) abzutrennen.

## Revendications

1. Procédé de préparation d'une bande assemblée (130) comprenant une pluralité de segments de couche de préimprégné (104a, 104b), comprenant les étapes consistant à :
dérouler, depuis une première bobine (102), une bande (104) s'étendant de manière continue et comprenant un matériau de renfort imprégné de résine ;
découper une longueur prédéterminée (l1) de la bande (104) s'étendant de manière continue pour former un premier segment de couche de préimprégné (104a) ;
découper une deuxième longueur prédéterminée (l2) du matériau de renfort continu imprégné de résine pour former un deuxième segment de couche (104b) ; et
**caractérisé en ce que** le procédé comprend l'application du premier segment de couche de préimprégné (104a) sur une bande support (116) s'étendant de manière continue pour former une partie de la bande assemblée (130), et l'application du deuxième segment de couche (104b) sur la bande support (116) s'étendant de manière continue, à une distance prédéterminée (d1) du premier segment de couche de préimprégné (104a), en tant que partie de la bande assemblée (130).

2. Procédé selon la revendication 1, dans lequel la bande (104) s'étend de manière continue, sans interruption, entre un dispositif de coupe (112) et la première bobine (102).

3. Procédé selon la revendication 1, dans lequel la bande (104) est tendue par ou autour d'au moins un bloc de tension (106) entre un dispositif de coupe (112) et la première bobine (102).

4. Procédé selon la revendication 3, dans lequel l'au moins un bloc de tension (106, 110) sur lequel s'étend la bande (104) comprend un canal ou une rainure (134) dans lequel ou laquelle la bande (104) s'étend lorsqu'elle est entraînée par au moins un rouleau (108a, 108b).

5. Procédé selon la revendication 1, dans lequel la bande (104) est transportée ou tirée depuis la première bobine (102) par au moins un rouleau (108a, 108b) en direction d'un dispositif de coupe (112).

6. Procédé selon la revendication 5, dans lequel l'au moins un rouleau (108a, 108b) transporte la bande (104) de manière intermittente en direction d'un dispositif de coupe (112) en fonction du placement et de l'espacement des premier et deuxième segments de couche de préimprégné (104a, 104b) sur la bande support (116), ou l'au moins un rouleau (108a, 108b) cesse de transporter la bande (104) lorsqu'une longueur prédéterminée de la bande s'étend au-delà du dispositif de coupe (112) pour la formation du premier segment de couche de préimprégné (104a).

7. Procédé selon la revendication 1, dans lequel la bande support (116) est entraînée de manière continue, sans interruption ni arrêt, par rapport au transport intermittent de la bande (104), un bord sectionné de la bande (104) étant suspendu dans le poste de coupe (113) pendant que la bande support (116) est transportée jusqu'à ce qu'une distance (d) soit formée, de sorte que la bande (104) est ensuite avancée à travers le poste de coupe (113) et appliquée sur la bande support (118) jusqu'à ce qu'une longueur prédéterminée soit atteinte, moment auquel le dispositif de coupe (112) sectionne de la bande (104) le premier segment de couche de préimprégné (104a) ainsi formé.

8. Procédé selon la revendication 7, dans lequel la bande support (116) s'étend au-delà d'au moins un bloc de tension (117a, 117b) et est tendue autour de celui-ci avant que le premier segment de couche de préimprégné (104a) n'y soit déposé.

9. Procédé selon la revendication 1, dans lequel le premier segment de couche de préimprégné (104a) est collé à la bande support (116) pendant que la bande support (116) est entraînée de manière continue sur un bloc de tension (122), et le premier segment de couche de préimprégné (104a) et la bande support (116) sont pressés l'un contre l'autre entre un bloc de pincement (124) et le bloc de tension (122).

10. Procédé selon la revendication 9, dans lequel le premier segment de couche de préimprégné (104a) comprend un adhésif ou des propriétés adhésives, la bande support (116) ayant des propriétés permettant le retrait du premier segment de couche de préimprégné (104a) dans son ensemble tout en maintenant la bande support (116) intacte, et la bande support étant agencée pour résister à des forces de décollement d'une intensité prédéterminée lorsque le premier segment de couche de préimprégné en est retiré.

11. Procédé selon la revendication 9, dans lequel le bloc de pincement (124) et le bloc de tension (122) forment une fente (125) à travers laquelle le premier segment de couche de préimprégné (104a) est collé à la bande support (116), chacun d'eux étant entraîné à travers celle-ci.

12. Procédé selon la revendication 11, dans lequel la fente (125) forme une première extrémité présentant une entrée d'alimentation (127) ayant une hauteur (h) supérieure à celle d'une deuxième extrémité définissant un pincement (126) par lequel le premier segment de couche de préimprégné (104a) est pressé sur la bande support (116).

13. Procédé selon la revendication 1, dans lequel soit le premier segment de couche de préimprégné (104a) est plus épais que la bande support (116), soit le premier segment de couche de préimprégné (104a) est plus rigide que la bande support (116).

14. Procédé selon la revendication 1, dans lequel la bande support (116) est plus large que le premier segment de couche de préimprégné (104a), ou les premier et deuxième segments de couche de préimprégné ont une même longueur (l1, l2).

15. Procédé selon la revendication 1, comprenant en outre l'étape consistant à retirer un film porteur (118) du premier segment de couche de préimprégné (104a) avant ou lors de la découpe d'une longueur prédéterminée du matériau de renfort continu imprégné de résine ;
dans lequel le film porteur (118) est écarté de la bande (104) au niveau d'un poste de coupe (113), défini comme un espace entre des premier et deuxième blocs de tension (110, 122) espacés l'un de l'autre d'un jeu dans lequel un dispositif de coupe (112) peut être actionné pour sectionner le premier segment de couche de préimprégné (104a) de la bande (104).
